# EUROPEAN PATENT APPLICATION

(11) **EP 1 775 491 A2**
(43) Date of publication of application: **18.04.2007**
(21) Application number: 06076784.5
(22) Date of filing: 27.09.2006
(51) Int. Cl.: F16D 3/205

(54) **Retainer for a constant velocity universal joint assembly**

(30) Priority: 11.10.2005 US 725202 P
(71) Applicant: Delphi Technologies, Inc., Troy, Michigan 48007 (US)
(72) Inventor: Norris, Todd A., Saginaw, MI 48638 (US)
(74) Representative: Denton, Michael John

(57) **Abstract**

A stroking constant velocity universal joint assembly (20) includes a housing (22), a retainer (26), and a drive unit (24). The housing (22) includes an open end (28) and defines a bore (34) extending from the open end (28). The retainer (26) is coupled to the housing (22) and defines a proximal end (58) adjacent the open end (28) and a through-hole (60) aligned with the bore (34). The drive unit (24) includes a drive spider (38) disposed in the bore (34) and a drive shaft (40) extending from the drive spider (38) through the through-hole (60). The drive shaft (40) is capable of angulating relative to the housing (22). The retainer (26) retains the drive spider (38) in the bore (34) and includes a plurality of tabs (62) partially defining the through-hole (60). Each tab (62) includes an inner surface (66) extending from the proximal end (58) to a distal end (68). The inner surface (66) angles outwardly relative to the longitudinal axis (56) for increasing a range of angulation of the drive shaft (40) in a direction toward one of the tabs (62).

## Description

### BACKGROUND OF THE INVENTION

The present invention is a constant velocity universal joint assembly including a retainer.

Stroking constant velocity universal joint assemblies, hereinafter referred to as universal joint assemblies, are typically employed in automotive axial driveshafts and especially in front-wheel-drive vehicles. Universal joint assemblies include a housing and a drive unit engaged with the housing. The housing includes an open end and defines a bore extending from the open end along a central axis. The housing defines drive channels extending along the bore. The drive unit includes a drive spider disposed in the bore and a drive shaft extending from the drive spider and through the open end of the housing. The drive spider includes a plurality of trunnions extending along co-planar radial axes and drive rollers rotatably mounted to the trunnions.

The drive rollers are disposed in the channels. The drive rollers rotate about the trunnions in the drive channels in response to axial movement of the drive unit relative to the housing along the central axis such that the spider assembly strokes in the housing. The drive shaft is capable of angulating relative to the housing in response to angular movement of the drive shaft relative to the housing.

The universal joint assembly includes a retainer for retaining the drive spider in the bore of the housing. It is known in the art to include a retainer coupled to the housing at the open end of the housing to retain the drive spider in the bore of the housing. The retainer partially encloses the bore of said housing and defines a through-hole aligned with the bore. The drive shaft extends from the drive spider through the through-hole of the retainer. The drive spider is sized larger than the through-hole of the retainer for retaining the drive spider in the bore.

Typically, retainers are coupled to the housing by including retaining members extending into the bore of the housing and engaging the housing in the bore. As such, the retainer occupies a portion of the bore and the length of the housing must be increased such that the stroke of the drive spider in the bore is not decreased by the portion of the bore occupied by the retaining members of the retainer. Additionally, the retainer decreases the range of angulation of the drive shaft relative to the housing. Because the drive shaft extends through the through-hole of the retainer and the retainer is coupled to the open end of the housing, the retainer extends from the open end and interferes with the full angulation of the drive shaft relative to the housing. Also, the time required to assemble the retainer to the housing increases the overall time required to assemble the universal joint assembly.

Accordingly, it would be desirable to manufacture a retainer for a universal joint assembly that does not require the lengthening of the housing to couple the retainer to the housing and does not interfere with the angulation of the drive shaft relative to the housing.

### SUMMARY OF THE INVENTION

The present invention is retainer for a stroking constant velocity universal joint assembly, hereinafter referred to as the universal joint assembly. The universal joint assembly includes a housing defining a bore, a drive spider disposed in the bore, and a drive shaft coupled to the drive spider extending from the bore. The drive shaft is capable of angulating relative to the housing. The retainer includes a plurality of retaining segments spaced circumferentially about a longitudinal axis and a plurality of tabs extending between the retaining segments circumferentially about the longitudinal axis. The tabs and the retaining segments define a proximal end for positioning the retainer adjacent the housing. The retaining segments partially enclose the bore to retain the drive spider in the bore. The tabs include a distal end and an inner surface extending from the proximal end of the retainer to the distal end of the tab. The inner surface angles outwardly relative to the longitudinal axis for increasing a range of angulation of the drive shaft in a direction toward one of the tabs.

Accordingly, because the retainer includes the proximal end for positioning the retainer adjacent the housing, the retainer does not require the lengthening of the housing to couple the retainer to the housing. Additionally, because the inner surface of the tabs angle outwardly relative to the longitudinal axis, the range of angulation of the drive shaft in a direction toward one of the tabs is increased. In other words, the angle of the inner surface allows for angulation of the drive shaft without interference between the drive shaft and the tabs during angulation.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is an exploded perspective view, partly in section, of a stroking constant velocity universal joint assembly including a housing, a drive unit, and retainer;
Figure 2 is a perspective view, partly in section, of the stroking constant velocity universal joint assembly;
Figure 3 is a perspective view of the retainer;
Figure 4 is a perspective view of the retainer engaging drive rollers of the drive unit;
Figure 5 is a cross-sectional view of a portion of the stroking constant velocity universal joint assembly including a boot for coupling the retainer to the housing; and
Figure 6 is a cross-sectional view of a portion of the stroking constant velocity universal joint assembly including a bushing for coupling the retainer to the housing.

### DESCRIPTION OF THE PREFERRED EMBODIMENT

Referring to the Figures, wherein like numerals indicate corresponding parts throughout the several views, a stroking constant velocity universal joint assembly is shown generally at 20. The stroking constant velocity universal joint assembly 20, hereinafter referred to as universal joint assembly 20, is also known to one skilled in the art as a tripot, or tripod, universal joint assembly 20.

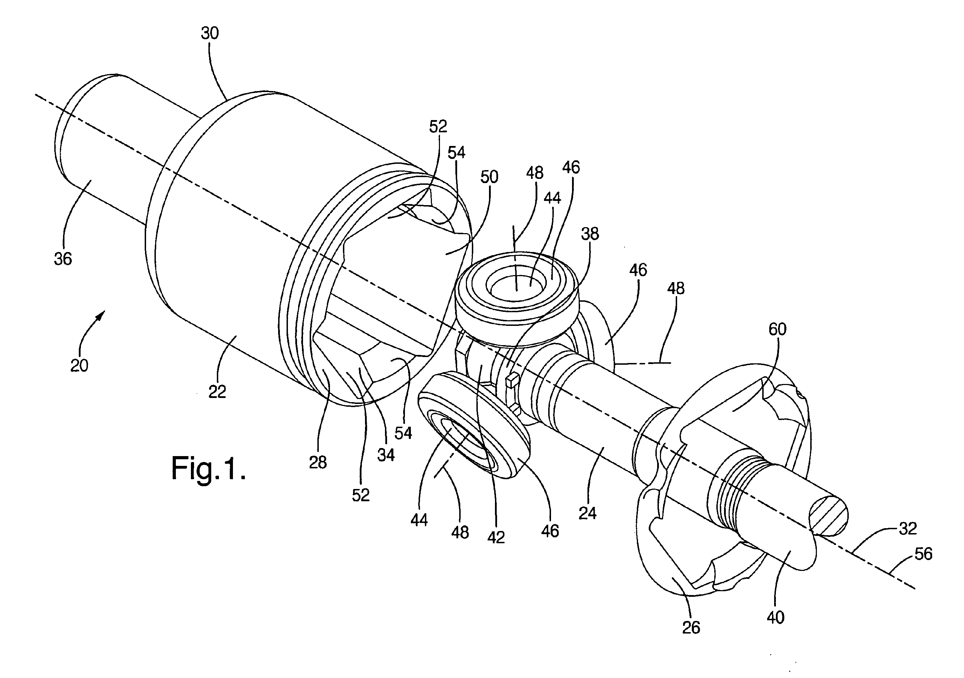

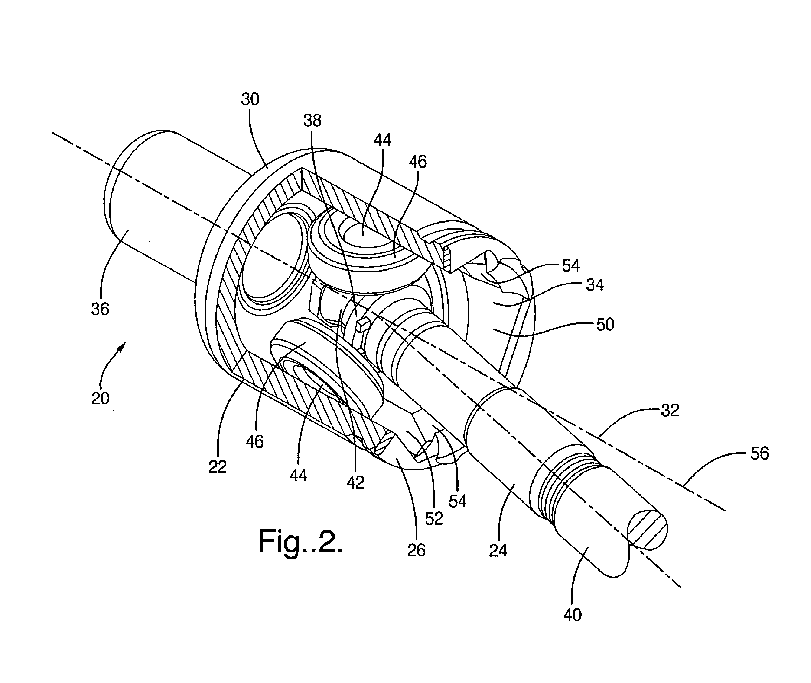

As shown in Figures 1 and 2, the universal joint assembly 20 includes a housing 22, a drive unit 24 engaged with the housing 22, and a retainer 26 retaining the drive unit 24 in engagement with the housing 22. The housing 22 includes an open end 28 and a walled end 30 and the housing 22 extends along a central axis 32 between the open end 28 and the walled end 30. The housing 22 defines a bore 34 extending from the open end 28 in a direction toward the walled end 30 along the central axis 32. A drive rod 36 extends from the walled end 30 of the housing 22 along the central axis 32 of the housing 22 for driven connection with another component.

The drive unit 24 includes a drive spider 38 disposed in the bore 34 of the housing 22 and a drive shaft 40 extending from the drive spider 38 and through the open end 28 of the housing 22 for driven communication with another component. The drive shaft 40 is engaged with the drive spider 38. The drive spider 38 is linearly moveable along the bore 34 along the central axis 32.

The drive spider 38 includes a hub 42, a plurality of trunnions 44 extending radially from the hub 42, and a plurality of drive rollers 46 with each drive roller 46 respectively rotatably mounted on one of the trunnions 44. Preferably, the drive spider 38 includes three trunnions 44 equally spaced at 120 degrees from each other on co-planar radial axes 48. Each drive roller 46 is rotatable and pivotal about each trunnion 44, respectively. Each of the trunnions 44 has a semi-spherical surface concentric about the radial axis 48. Each drive roller 46 includes an inner roller, an outer roller, and a train of needle bearings disposed between the inner roller and the outer roller. The movement between the outer roller and the inner roller is rotational about the co-planar radial axis 48 and the movement between the inner roller and the trunnion 44 is generally pivotal. Specifically, the inner rollers are pivotally mounted to the semi-spherical surface of the trunnions 44 and have an interior surface corresponding in shape to the semi-spherical surface of the trunnions 44. The outer roller rotates about the radial axis 48 via the train of needle bearings. It should be appreciated that the present invention is not limited to the drive rollers 46 described herein but may be any type of drive roller 46 known to one skilled in the art.

The housing 22 includes an interior wall 50. The interior wall 50 defines the bore 34, a plurality of drive channels 52, and a plurality of ramps 54. Specifically, the drive channels 52 and the ramps 54 are defined by the interior wall 50 in alternating relationship. Each drive roller 46, respectively, is disposed in one of the drive channels 52.

The drive channels 52 may correspond in size and shape to the drive rollers 46. The drive rollers 46 rotate about the trunnions 44 in the drive channels 52 in response to axial movement of the drive unit 24 relative to the housing 22 along the central axis 32. In other words, the drive rollers 46 allow the drive unit 24 to stroke relative to housing 22.

The ramps 54 extend to the open end 28 of the housing 22. Specifically, the ramps 54 extend outwardly relative to the central axis 32 of the housing 22 toward the open end 28 of the housing 22. As shown in Figure 2, the drive shaft 40 is capable of angulating relative to the housing 22. In other words, the drive shaft 40 is capable of pivoting about the drive spider 38 relative to the housing 22. Specifically, the drive rollers 46 pivot in response to angular movement of the drive shaft 40 relative to the housing 22. More specifically, the drive shaft 40 is capable of angulating toward the ramps 54 of the housing 22. Because the ramps 54 of the housing 22 extend outwardly relative to the central axis 32 toward the open end 28 of the housing 22, the ramps 54 increase the range of angulation of the drive shaft 40 relative to the housing 22. In other words, the ramps 54 enable increased range of angulation of the drive shaft 40 relative to the housing 22 without interference of the drive shaft 40 by the interior wall 50 of the housing 22.

As shown in Figures 1 and 2, the retainer 26 is coupled to the housing 22 and extends about a longitudinal axis 56. Preferably the longitudinal axis 56 of the retainer 26 is co-axial with the central axis 32 of the housing 22. The retainer 26 defines a proximal end 58 adjacent the open end 28 of the housing 22 and partially encloses the bore 34 of the housing 22. The retainer 26 defines a through-hole 60 aligned with the bore 34 and the drive shaft 40 of the drive unit 24 extends through the through-hole 60 of the retainer 26. As will be discussed in more detail below, the drive spider 38 is sized larger than the through-hole 60 of the retainer 26 for retaining the drive spider 38 in the bore 34.

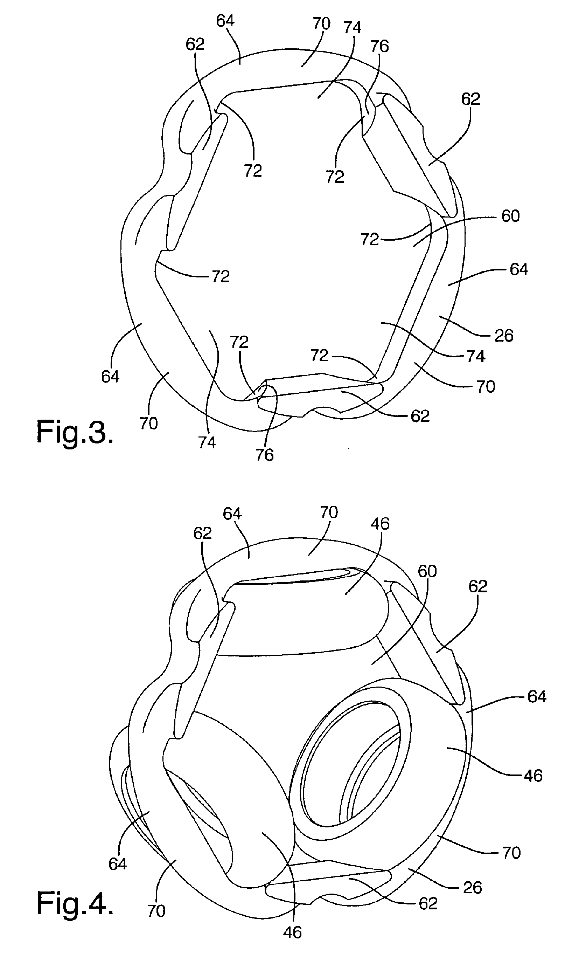

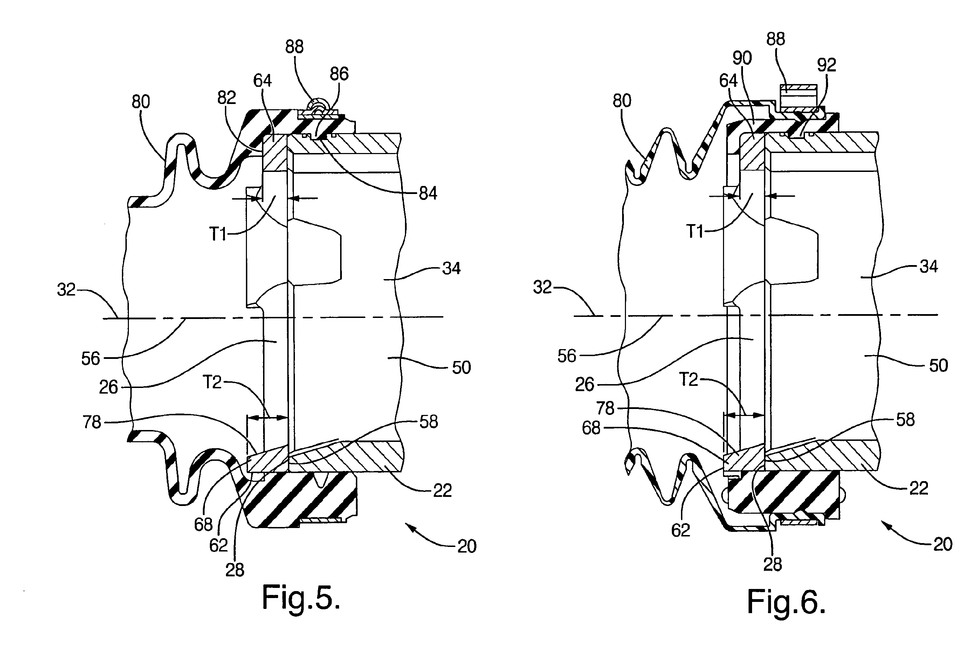

As shown in Figures 3 and 4, the retainer 26 includes a plurality of tabs 62 extending circumferentially about the longitudinal axis 56 and a plurality of retaining segments 64 extending between the tabs 62 circumferentially about the longitudinal axis 56. As will be discussed in detail below, preferably the tabs 62 and the retaining segments 64 extend in alternating relationship.

The tabs 62 and the retaining segments 64 may be integral and continuous with one another for forming a one-piece retainer 26. For example, the tabs 62 and the retaining segments 64 may be formed during a single process such that the tabs 62 and the retaining segments 64 form the one-piece retainer 26. Alternatively, the tabs 62 and the retaining segments 64 may be formed as separate components and combined to form the one-piece retainer 26.

The retainer 26 may include any number of retaining segments 64 and any number of tabs 62. The retainer 26 may have an equal number of retaining segments 64 than tabs 62 or alternatively, the retainer 26 may have a different number of retaining segments 64 than tabs 62. For example, the plurality of retaining segments 64 may include three retaining segments 64 and the plurality of tabs 62 may include three tabs 62.

Preferably, the retaining segments 64 and the tabs 62 extend in alternating relationship with the retaining segments 64 and the tabs 62 forming a ring-shaped retainer 26. In other words, the each retaining segment 64 extends between a pair of tabs 62 and each tab 62 extends between a pair of retaining segments 64 such that the retaining segments 64 and the tabs 62 in combination form a continuous ring. Alternatively, for example, the retainer 26 may include one less tab 62 than retaining segments 64. In such a configuration, two of the retaining segments 64, respectively, extend from the tab 62 to a free end. In other words, the retainer 26 may be C-shaped.

The tabs 62 partially define the through-hole 60 of the retainer 26. Specifically, the tabs 62 and the retaining segments 64 in combination define the through-hole 60. The tabs 62 and the retaining segments 64 define the proximal end 58 of the retainer 26.

As shown in Figures 1 and 2, the retainer 26 is positioned relative to the housing 22 such that each of the ramps 54 of the housing 22 is aligned with one of the tabs 62 of the retainer 26 and each of the drive channels 52 of the housing 22 is aligned with one of the retaining segments 64 of the retainer 26. Preferably, the number of retaining segments 64 equals the number of drive channels 52. Each tab 62 includes an inner surface 66 extending from the proximal end 58 of the retainer 26 to a distal end 68 of the tab 62. As shown in Figures 3 and 4, the inner surface 66 widens from the proximal end 58 to the distal end 68. The inner surface 66 is planar between the proximal end 58 and the distal end 68.

As shown in Figures 3-6, the inner surface 66 angles outwardly relative to the longitudinal axis 56 for increasing a range of angulation of the drive shaft 40 in a direction toward one of the tabs 62. Specifically, the drive shaft 40 angulates toward the tabs 62 of the retainer 26. Because the inner surface 66 angles outwardly relative to the longitudinal axis 56, the ramps 54 increase the range of angulation of the drive shaft 40 relative to the retainer 26. In other words, the tabs 62 allow for the full angulation of the drive shaft 40 relative to the housing 22 that would be possible if the retainer 26 were not coupled to the open end 28 of the housing 22. Thus, the retainer 26 does not interfere with the normal operation of the universal joint assembly 20.

As shown in Figures 3 and 4, each of the retaining segments 64 includes a base portion 70 and a pair of side portions 72 spaced from each other. The side portions 72 extend from the base portion 70 toward the longitudinal axis 56 over a portion of the bore 34 for partially enclosing the bore 34 to retain the drive spider 38 in the housing 22. Because the retaining segments 64 are aligned with the channels of the housing 22, the retaining segments 64 restrict the width of the channels to prevent the removal of the drive unit 24 from the housing 22 by physically blocking the channels.

Specifically, each of the tabs 62 extends between the side portions 72 of two of the retaining segments 64. The side portions 72 define a gap 74 therebetween narrowing from the proximal end 58 of the retainer 26. Each of the side portions 72 includes a contact surface 76. The contact surfaces 76 may be shaped to correspond to the shape of the drive roller 46. As shown in Figure 4, during extension of the drive unit 24 relative to the housing 22, the contact surfaces 76 receive the drive rollers 46 and prevent the removal of the drive rollers 46 from the housing 22.

As shown in Figures 5 and 6, each of the retaining segments 64 defines a first thickness T1 along the longitudinal axis 56 and each of the tabs 62 defines a second thickness T2 along the longitudinal axis 56. The second thickness T2 of the tabs 62 is greater than the first thickness T1 of the retaining segments 64. Specifically, each of the tabs 62 defines an extension 78 presenting the distal ends 68 of the tabs 62 and extending outwardly from the first thickness T1 of the retaining segment 64 along the longitudinal axis 56 for further defining the second thickness T2. The second thickness T2 of the tabs 62 is greater than the first thickness T1 of the retaining segments 64 to increase the structural rigidity of the retainer 26.

The retainer 26 may be formed of plastic. For example, the retainer 26 may be formed by an injection molding process. However, it should be appreciated that the retainer 26 may be formed from any type of rigid material.

Figure 5 shows a first embodiment for coupling the retainer 26 to the housing 22. Specifically, a boot 80 is coupled to the housing 22 and the retainer 26 for maintaining the proximal end 58 of the retainer 26 adjacent the open end 28 of the housing 22. The boot 80 includes a shoulder 82 for engaging the retainer 26. Preferably, the shoulder 82 engages only the retaining segments 64 of the retainer 26. In other words, the shoulder 82 does not engage the tabs 62 of the retainer 26. The housing 22 defines a groove 84 and the boot 80 includes boot protrusion 86 that extends into and engages the groove 84. A clamp 88 exerts a clamping pressure to the boot 80 to pinch the boot 80 between the clamp 88 and the housing 22.

Figure 6 shows a second embodiment for coupling the retainer 26 to the housing 22. Specifically, the boot 80 may include a bushing 90 coupled to the boot 80 and coupled to the retainer 26. Preferably, the bushing 90 engages only the retaining segments 64 of the retainer 26. In other words, the bushing 90 does not engage the tabs 62 of the retainer 26. The bushing 90 includes a bushing protrusion 92 that extends into and engages the groove 84. The clamp 88 exerts the clamping pressure on the boot 80 to pinch the boot 80 and the bushing 90 between the clamp 88 and the housing 22.

In both the first embodiment and the second embodiment for coupling the retainer 26 to the housing 22, the assembly of the retainer 26 to the housing 22 is relatively quick and easy. Specifically, the boot 80 is placed on the housing 22 and clamp 88 is tightened. In other words, the present invention eliminates the need for directly attaching the retainer 26 to the housing 22. Further, because the proximal end 58 of the retainer 26 is adjacent the open end 28 of the housing 22, the length of the retainer 26 is maintained and the stroke of the drive spider 38 in the bore 34 is maintained. In other words, because the retainer 26 is coupled to the housing 22 without extending into the housing 22 in the bore 34, the stroke of the drive spider 38 in the bore 34 is not decreased by the retainer 26. It should be appreciated that the current invention is not limited to first and second embodiment for coupling the retainer 26 to the housing 22.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. A stroking constant velocity universal joint assembly (20) comprising:
a housing (22) including an open end (28) and defining a bore (34) extending from said open end (28);
a retainer (26) coupled to said housing (22) extending about a longitudinal axis (56) and defining a proximal end (58) adjacent said open end (28) of said housing (22) partially enclosing said bore (34) of said housing (22) and defining a through-hole (60) aligned with said bore (34); and
a drive unit (24) including a drive spider (38) disposed in and linearly moveable along said bore (34) sized larger than said through-hole (60) of said retainer (26) for retaining said drive spider (38) in said bore (34) and a drive shaft (40) extending from said drive spider (38) through said through-hole (60) of said retainer (26) capable of angulating relative to said housing (22);
said retainer (26) including a plurality of tabs (62) partially defining said through-hole (60) each including an inner surface (66) extending from said proximal end (58) to a distal end (68) with said inner surface (66) angling outwardly relative to said longitudinal axis (56) for increasing a range of angulation of said drive shaft (40) in a direction toward one of said tabs (62).

2. The stroking constant velocity universal joint assembly (20) as set forth in claim 1 wherein said tabs (62) extend circumferentially about said longitudinal axis (56) and said retainer (26) includes a plurality of retaining segments (64) extending between said tabs (62) circumferentially about said longitudinal axis (56) with said tabs (62) and said retaining segments (64) defining said proximal end (58).

3. The stroking constant velocity universal joint assembly (20) as set forth in claim 2 wherein each of said retaining segments (64) define a first thickness along said longitudinal axis (56) and each of said tabs (62) define a second thickness along said longitudinal axis (56) greater than said first thickness.

4. The stroking constant velocity universal joint assembly (20) as set forth in claim 3 wherein each of said tabs (62) defines an extension (78) presenting said distal ends (68) of said tabs (62) and extending outwardly from said first thickness of said retaining segment (64) along said longitudinal axis (56) for further defining said second thickness.

5. The stroking constant velocity universal joint assembly (20) as set forth in claim 2 wherein each of said retaining segments (64) include a base portion (70) and a pair of side portions (72) spaced from each other and extending from said base portion (70) toward said longitudinal axis (56) over a portion of said bore (34) for partially enclosing said bore (34) to retain said drive spider (38) in said housing (22).

6. The stroking constant velocity universal joint assembly (20) as set forth in claim 5 wherein said tabs (62) and said retaining segments (64) extend in alternating relationship and each of said tabs (62) extend between said side portions (72) of two of said retaining segments (64).

7. The stroking constant velocity universal joint assembly (20) as set forth in claim 1 wherein said inner surface (66) widens from said proximal end (58) to said distal end (68).

8. The stroking constant velocity universal joint assembly (20) as set forth in claim 1 wherein said inner surface (66) is planar between said proximal end (58) and said distal end (68).

9. The stroking constant velocity universal joint assembly (20) as set forth in claim 1 wherein said housing (22) includes an interior wall (50) defining said bore (34) and a plurality of drive channels (52) each aligned with one of said retaining segments (64) and a plurality of ramps (54) each aligned with one of said tabs (62) and extending to said open end (28).

10. The stroking constant velocity universal joint assembly (20) as set forth in claim 9 wherein said drive spider (38) includes a hub (42) and a plurality of trunnions (44) extending radially from said hub (42) and a plurality of drive rollers (46) with each drive roller (46) respectively rotatably mounted on one of said trunnion (44)s and disposed in one of said drive channel (52)s.

11. The stroking constant velocity universal joint assembly (20) as set forth in claim 1 including a boot (80) coupled to said housing (22) and said retainer (26) for maintaining said proximal end (58) of said retainer (26) adjacent said open end (28) of said housing (22).

12. The stroking constant velocity universal joint assembly (20) as set forth in claim 10 wherein said boot (80) includes a bushing (90) engaging said retainer (26) and said housing (22) for maintaining said proximal end (58) of said retainer (26) adjacent said open end (28) of said retainer (26).

13. A retainer (26) for use with a stroking constant velocity universal joint assembly (20) including a housing (22) defining a bore (34), a drive spider (38) disposed in the bore (34), and a drive shaft (40) coupled to the drive spider (38) extending from the bore (34) capable of angulating relative to the housing (22), said retainer (26) comprising:
a plurality of retaining segments (64) spaced circumferentially about an longitudinal axis (56) for partially enclosing the bore (34) to retain the drive spider (38) in the bore (34); and
a plurality of tabs (62) extending between said retaining segments (64) circumferentially about said longitudinal axis (56) with said tabs (62) and said retaining segments (64) defining a proximal end (58) for positioning said retainer (26) adjacent the housing (22);
said tabs (62) including a distal end (68) and an inner surface (66) extending from said proximal end (58) to said distal end (68) with said inner surface (66) angling outwardly relative to said longitudinal axis (56) for increasing a range of angulation of the drive shaft (40) in a direction toward one of said tabs (62).

14. The retainer (26) as set forth in claim 13 wherein said inner surface (66) widens from said proximal end (58) to said distal end (68).

15. The retainer (26) as set forth in claim 13 wherein each of said retaining segments (64) define a first thickness along said longitudinal axis (56) and each of said tabs (62) define a second thickness along said longitudinal axis (56) greater than said first thickness.

16. The retainer (26) as set forth in claim 15 wherein each of said tabs (62) defines an extension (78) presenting said distal ends (68) of said tabs (62) and extending outwardly from said first thickness of said retaining segment (64) along said longitudinal axis (56) for further defining said second thickness.

17. The retainer (26) as set forth in claim 13 wherein said inner surface (66) is planar between said proximal end (58) and said distal end (68).

18. The retainer (26) as set forth in claim 13 wherein each of said retaining segments (64) includes a base portion (70) and a pair of side portions (72) spaced from each other and extending from said base portion (70) toward said longitudinal axis (56) for partially enclosing the bore (34) to retain the drive spider (38) in the housing (22).

19. The stroking constant velocity universal joint assembly (20) as set forth in claim 13 wherein said tabs (62) and said retaining segments (64) extend in alternating relationship and each of said tabs (62) extend between said side portions (72) of two of said retaining segments (64).

20. The retainer (26) as set forth in claim 13 wherein said tabs (62) and said retaining segments (64) are integral and continuous with one another for forming a one-piece retainer (26).

21. The retainer (26) as set forth in claim 13 wherein said plurality of retaining segments (64) includes three retaining segments (64) and said plurality of tabs (62) includes three tabs (62) in alternating relationship with said retaining segments (64) and said tabs (62) forming a ring-shaped retainer (26).
